# EUROPEAN PATENT SPECIFICATION

(11) **EP 2 847 033 B1**
(45) Date of publication and mention of the grant of the patent: **25.10.2017**
(21) Application number: 13725241.7
(22) Date of filing: 07.05.2013
(51) Int. Cl.: B60N 2/22

(54) **INCLINATION ADJUSTING APPARATUS**
NEIGUNGSVERSTELLVORRICHTUNG
DISPOSITIF D'AJUSTEMENT DE L'INCLINAISON

(30) Priority: 07.05.2012 US 201261643587 P
(43) Date of publication of application: 18.03.2015
(73) Proprietor: Johnson Controls Technology Company, Milwaukee, WI 53209 (US)
(72) Inventor: LINNENBRINK, Jorg, 42327 Wuppertal DE (DE); KIENKE, Ingo, 42929 Wermelskirchen (DE); SEIBOLD, Kurt, Whitmore Lake, MI 48189 (US); BALIN, Alexander, I., Ann Arbor, MI 48103 (US)
(74) Representative: Wolff, Felix
(86) International application number: PCT/US2013/039863
(87) International publication number: WO 2013/169720

(56) References cited:
- WO-A1-97/20706
- WO-A1-2012/009515
- FR-A- 703 111
- US-A1- 2011 304 188

## Description

### CLAIM OF PRIORITY

The present invention relates to an inclination adjusting apparatus for adjusting a backrest of a vehicle seat with respect to a seat part, wherein a side part of the seat part and a side part of the backrest are coupled pivotably together about a pivot point and the backrest is latchable in the respective inclined position by way of a locking element. The present invention further relates to a vehicle seat and a method to operate the inventive inclination adjusting apparatus. Documents US2011/0304188A1 and WO97/20706 disclose an inclination adjusting apparatus and a method to operate the inclination adjusting apparatus according to the preamble of claim 1, respectively to the preamble of claim 13.

In automotive engineering, there is a continuous desire to produce a inclination adjusting apparatus more easily and/or cost-effectively.

It was therefore the object of the present invention to provide an Inclination adjusting apparatus which meets the abovementioned requirement.

The object is achieved by an inclination adjusting apparatus for adjusting a backrest of a vehicle seat with respect to a seat part as defined in claim 1.

An adjusting lever is preferably operatively connected to a transmission rod which more preferably couples a backrest adjusting mechanism arranged on the right-hand side of the vehicle seat to a backrest adjusting mechanism arranged on the left-hand side of the vehicle seat. More preferably, the transmission rod is guided, preferably in each case, through the part-circular cutout.

Preferably, at least portions of the transmission rod are surrounded by at least one, preferably two, guiding element(s) which is/are more preferably arranged on the transmission rod in rotationally fixed and/or displaceable manner. Preferably, there is a form- and/or force-fit between the outer circumference of the transmission rod and the inner circumference of the guiding means, respectively.

The disclosure made for this subject of the present invention applies in equal measure to the other subjects of the present invention, and vice versa.

Preferably, or according to a further subject of the present invention, the locking elements are provided to be axially displaceable along the transmission rod.

Preferably, a locking element is provided on the right-hand and left-hand side of the transmission rod in a rotationally and axially displaceable manner on a transmission rod. In this case, preferably a compression spring element which more preferably surrounds the transmission rod is arranged preferably between the locking elements and acts on the ends of the two locking elements.

Preferably, each locking elements partially encloses a transfer element. More preferably, on the outer circumference of each transfer element a helical element is provided, which engages more preferably with a correspondingly shaped cutout in the respective locking element.

At that end of the respective locking elements, which is directed in the direction of the backrest adjusting mechanism, there is preferably arranged a locking portion. This flocking portion preferably interacts in a locking fashion with the part-circular cutout in the side part of the backrest. The locking portion and the part-circular cutout each preferably comprise a toothed portion, which interact in a locking manner. In this case, the toothed portions of the part-circular cutout and the locking portion are arranged in a manner engaging in a positively locking manner in one another in a locked state of the inclination adjusting apparatus.

In this case, the locking portion of the locking lement is moved out of the part-circular cutout in the side part of the backrest, the positively locking connection between the part-circular cutout and the locking portion is released and the inclination of the back rest can be adjusted.

During operation of the inclination adjusting apparatus, the transfer element is rotated, for example by means of an adjusting lever. The rotation of the transfer element displaces the locking element due to the helical formation on the outer circumference of the transfer element. A displacement movement of two locking elements towards one another preferably compresses a spring element.

A further subject of the present invention is a vehicle seat having a seat part and a backrest having the inclination adjusting apparatus according to the invention.

The disclosure made for this subject of the present invention applies in equal measure to the other subjects of the present invention, and vice versa.

Another subject of the present invention is a method to operate the inclination adjusting apparatus as defined in claim 13.

The inventions are explained in the following text on the basis of Figures 1-19. These explanations are merely byway of example and do not limit the general concept of the invention.

In the figures:
Figure 1 schematically shows a perspective, partially transparent illustration of a vehicle seat,
Figure 2 schematically shows an exploded illustration of an inclination adjusting apparatus for a backrest of vesicle seat,
Figure 3 schematically shows a perspective illustration of a lower portion of a side part of a backrest having a pivot point and a part-circular cutout,
Figure 4 schematically shows a perspective illustration of a transfer element arranged on a transmission rod,
Figure 5 schematically shows a perspective illustration of a locking element,
Figure 6 schematically shows a sectional illustration of a first backrest adjusting mechanism of an inclination adjusting apparatus for a backrest of a vehicle seat having an adjusting lever.
Figure 7 schematically shows a sectional illustration of a second backrest adjusting mechanism of an inclination adjusting apparatus for a backrest of a vehicle seat having an adjusting lever,
Figures 8 to 11 schematically show various views of an Inclination adjusting apparatus for a backrest of a vehicle seat in a locked state,
Figures 12 to 15 schematically show various views of an inclination adjusting apparatus for a backrest of a vehicle seat in an unlocked state,
Figure 16 schematically shows a side view of an inclination adjusting apparatus.
Figure 17 schematically shows a side view of an inclination adjusting apparatus in which the backrest is in a state pivoted entirely to the rear, and
Figure 18 schematically shows a side view of an inclination adjusting apparatus in which the backrest is in a state pivoted entirely to the front.
Figure 19 shows yet another embodiment of the inclination adjustment apparatus.

Parts that correspond to one another are provided with the same reference signs in all of the figures.

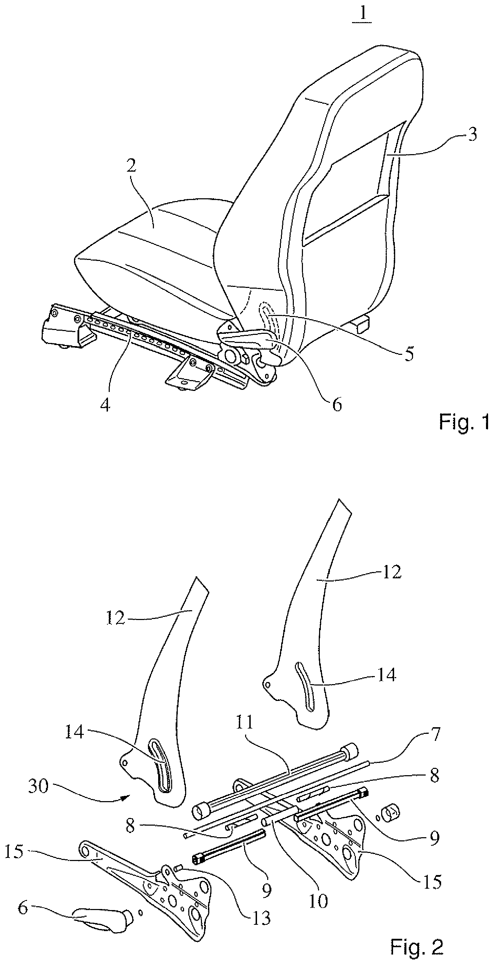

Figure 1 schematically shows a perspective illustration of a vehicle seat 1. The vehicle seat 1 is a conventional vehicle seat and comprises at least a seat part 2 and a backrest 3. Furthermore, the vehicle seat 1 has a conventional longitudinal adjustment device 4, by means of which the vehicle seat 1 is coupled to a bodywork structure of a vehicle (not illustrated).

The seat part 2 and the backrest 3 are coupled in a pivotable manner by means of an inclination adjusting apparatus 5, wherein a vehicle user can actuate the inclination adjusting apparatus 5 by means of an adjusting lever 6, By means of the adjusting lever 6. the inclination adjusting apparatus 5 can be actuated such that it is possible to set a backrest inclination of the vehicle seat 1. A person skilled in the art will understand that the adjustment of the backrest can also take place in a motorized manner. Furthermore, the inclination adjusting apparatus can operate continuously or discontinuously.

Figure 2 schematically shows an exploded illustration of the Inclination adjusting apparatus 5 for the backrest 3 of the vehicle seat 1. The Inclination adjusting apparatus 5 comprises the adjusting lever 6, a transmission rod 7, transfer elements 8, locking elements 9, preferably a compression spring element 10 and a support tube 11.

A side part 15 of the seat part 2 and a side part 12 of the backrest 3 are coupled together in a pivotable manner about a pivot point P by means of a pivot pin 13. Arranged in the side part 12 of the backrest 3 is a part-circular cutout 14, the centre-point of which is formed by the pivot point P between the side parts 12 and 15 and at least portions of which are toothed on the inside.

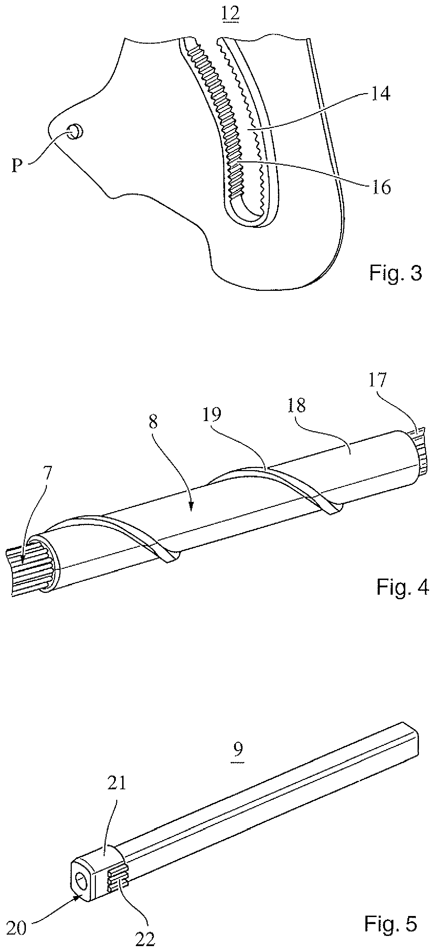

Figure 3 schematically shows a perspective illustration of a lower portion of the side part 12 of the backrest 3 having the pivot point P and the part-circular cutout 14. On the longitudinal sides, the part-circular cutout 14 has a respective toothing 16 on the inside.

Figure 4 schematically shows a perspective illustration of a transfer element 8 arranged on the transmission rod 7.

In this case, the transmission rod 7 couples a backrest adjusting mechanism of the inclination adjusting apparatus 5 arranged on the right-hand side and on the left hand side of the vehicle seat 1. Each end of the rod end is guided through the part-circular cutout 14, respectively. The transmission rod 7 preferably has channels 17 or grooves which extend in the longitudinal direction of the transmission rod 7.

At least portions of the transmission rod 7 are surrounded by two transfer elements 8 which here completely enclose the transmission rod 7 in the radial direction and which are arranged in a positively locking, rotationally fixed and displaceable manner on the transmission rod 7. In order to arrange the transfer element 8 in a positively locking, rotationally fixed and displaceable manner on the transmission rod 7, the tubular transfer element 8 has on the inside form- and/or force-fit means corresponding to the channels 17 in the transmission rod 7.

A respective helical formation 19 is arranged on an outer side 18 of the transfer elements 8.

Figure 5 schematically shows a perspective illustration of the locking element 9. Here, the locking element 9 is formed in a substantially tubular manner and is arranged on the transmission rod 7 in the fitted state of the inclination adjusting apparatus 5.

Arranged at that end 20 of the locking element 9 that is directed in the direction of the backrest adjusting mechanism of the inclination adjusting apparatus 5 is a locking portion 21, at least portions of which are formed in a manner corresponding to the part-circular cutout 14 in the side part 12 of the backrest 3. In this case, a toothing 22 is preferably formed on the locking portion 21, said toothing 22 being formed in a manner corresponding to the toothing 16 on the part-circular cutout 14.

On the inside, the locking element 9 is formed such that it encloses the outside of a transfer element 8, wherein the helical formation 19 on the transfer element 8 engages in a correspondingly formed cutout (not illustrated) in the locking element 9.

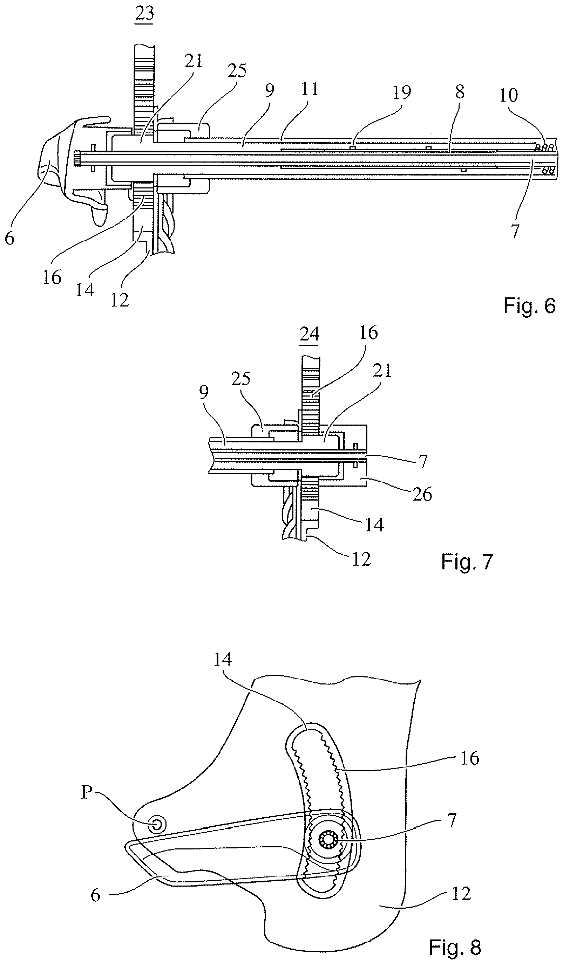

Figure 6 schematically shows a sectional illustration of a first backrest adjusting mechanism 23 of the inclination adjusting apparatus 5 for a backrest 3 of the vehicle seat 1 having the adjusting lever 6. The adjusting lever 6 is operatively connected to the transmission rod 7 on which the transfer element 8 and the locking element 9 are arranged and here enclosed by a support tube 11. The ends of the support tube 11 are widened in each case to form a holding portion 25 which is formed in a manner corresponding to the locking portion 21.

In a central region of the transmission rod 7, the compression spring element 10 is arranged at the end of each locking element 9.

Figure 7 schematically shows a sectional illustration of a second backrest adjusting mechanism 24 of the inclination adjusting apparatus 5 for a backrest 3 of the vehicle seat 1 having the adjusting lever 6. This corresponds substantially to the first backrest adjusting mechanism 23 except that a covering cap 26 is arranged at the end of the transmission rod.

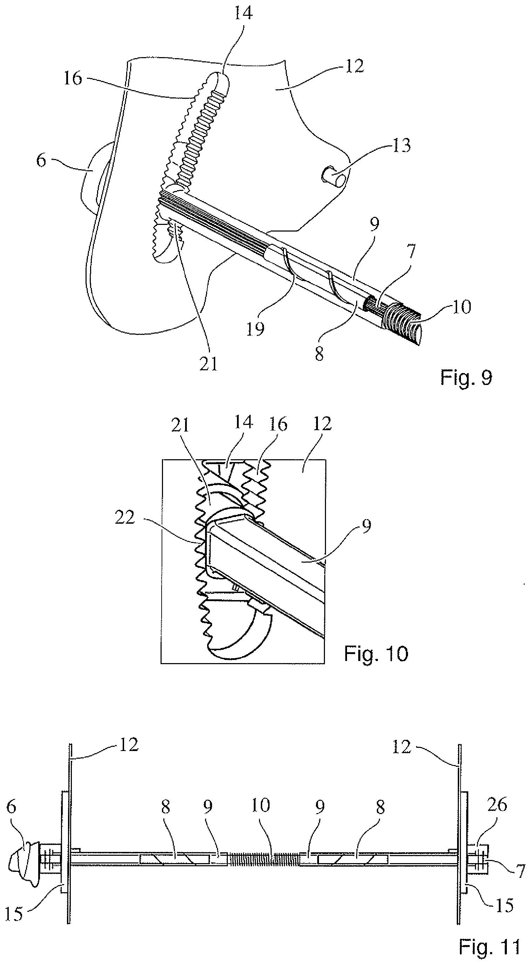

Figures 8 to 11 schematically show various views of the inclination adjusting apparatus 5 for the backrest 3 of the vehicle seat 1 in a locked state. In the locked state, the toothing 16 of the part-circular cutout 14 and the toothing 22 of the locking portion 21 engage in a positively locking manner in one another such that a pivoting movement about the pivot point P between the seat part 2 and the backrest 3 is prevented.

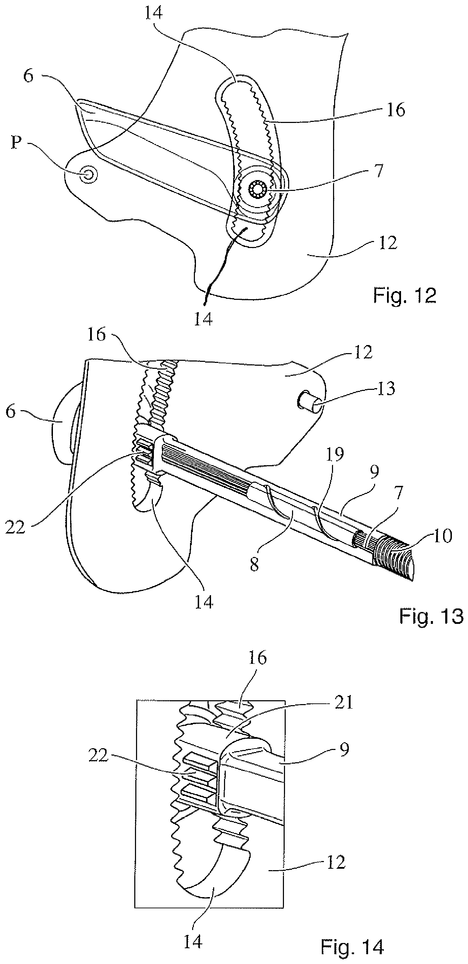

Figures 12 to 15 schematically show various views of the inclination adjusting apparatus 5 for the backrest 3 of the vehicle seat 1 in an unlocked state.

During operation of the inclination adjusting apparatus 5, the adjusting lever 6 is pivoted by the vehicle user. As a result, a rotation of the transmission rod 7 is actuated, and this causes a rotation of the transfer elements 8 due to the rotationally fixed arrangement of the guiding elements 8 on the transmission rod 7.

The rotation of the transfer element 8 is transmitted by the helical formation 19 into a linear displacement movement of the locking elements 9 along the longitudinal axis of the transmission rod 7. Thus, the two locking elements 9 arranged on the transmission rod 7 move towards one another and compress the compression spring element 10.

Due to the displacement movement of the locking elements 9, the locking portion 21 is moved out of the part-circular cutout 14 in the side part 12 of the backrest 3, and so the positively locking connection between the toothing 16 on the part-circular cutout 14 and the toothing 22 on the locking portion 21 is released and in this way the inclination adjusting apparatus 5 is unlocked. In an unlocked state of the inclination adjusting apparatus 5, a pivot movement about the pivot point P between the seat part 2 and the backrest 3 is possible.

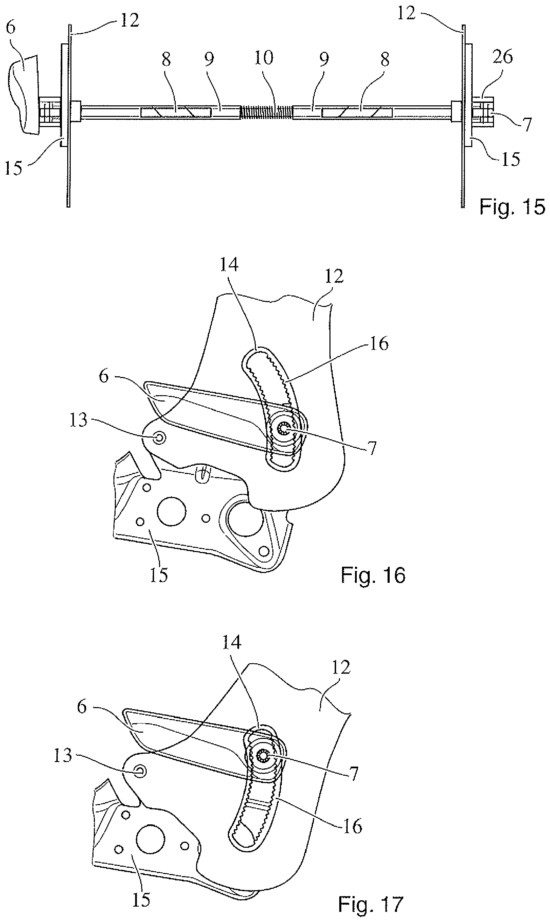

Figure 16 schematically shows a side view of the inclination adjusting apparatus 5 in a central position.

Figure 17 schematically shows a side view of the inclination adjusting apparatus 5 in which the backrest 3 is in a state pivoted entirely to the rear.

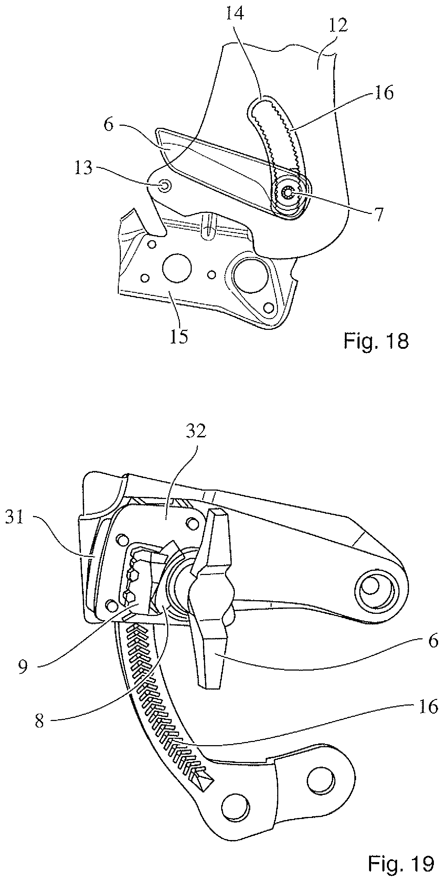

Figure 18 schematically shows a side view of the inclination adjusting apparatus 5 in which the backrest 3 is in a state pivoted entirely to the front.

Figure 19 shows yet another embodiment of the present invention. In the present case, the inclination of the backrest is fixed in a certain position by a locking element 9, which lockingly interacts with the toothing 16 at the seat part of the vehicle seat. By turning the handle 6, the transfer element 8 is turned likewise, which has at its outer circumference a cam which interacts with the locking element 9 and actuates it laterally so that it either removed from the toothing 16 or brought into contact with the toothing 16. The locking element 9 is guided in the housing 31 and a transfer plate. The locking element 9 axialy translates locking but preferably also rotates it about itself to make engament non linear removing clearances with the housing or the transfer plate.

### List of reference signs

Vehicle seat
Seat part
Backrest
Longitudinal adjusting device
Inclination adjusting apparatus
Adjusting lever
Transmission rod
Transfer element, pivoting element
Locking element
Compression spring element
Supporting tube
Side part
Pivot pin
Part-circular cutout
Side part
Toothing
Channel
Outer side
Formation
End
Locking portion
Positive locking means, toothing
First backrest adjusting mechanism
Second backrest adjusting mechanism
Holding portion
Covering cap
30 peripheral region of the side part of the seat part or of the backrest
31 Housing
32 transfer plate

## Claims

1. Inclination adjusting apparatus (5) for adjusting a backrest (3) of a vehicle seat with respect to a seat part (2), wherein a side part (15) of the seat part and a side part (12) of the backrest are coupled pivotably together about a pivot point (P) and the backrest is latchable in the respective inclined position by way of a locking element (9), **characterized in that** a dual sided partial-circular formation (14) is arranged in the side part (12) of the backrest and/or in the side part (15) of the seat part, said formation (14) having on its longitudinal sides a respective toothing (16) on the inside, wherein the toothing (16) is configured to interact with the locking element (9), wherein the inclination adjusting apparatus (5) comprises a transmission rod (7) configured to be moved between and along the longitudinal sides of the dual sided partial-circular formation (14) during an inclination of the backrest (3) from a state pivoted entirely to the rear to a state pivoted entirely to the front.

2. Inclination adjusting apparatus (5) according to Claim 1, **characterized in that** the locking element (9) is provided in an axially displaceable manner on the transmission rod (7) or pivoting element (8).

3. Inclination adjusting apparatus (5) according to one of the preceding claims, **characterized in that** on the right-hand and/or left-hand side of the transmission rod (7) a locking element is provided, respectively.

4. Inclination adjusting apparatus (5) according to claim 3, **characterized in, that** the locking element (9) is arranged in a rotationally and axially displaceable manner on the transmission rod (7) or pivoting element (8).

5. Inclination adjusting apparatus (5), according to one of the claims 2-4, **characterized in that** the locking element surrounds at least partially a transfer element (8).

6. Inclination adjusting apparatus (5), according to one of the claims 2-4, **characterized in that** the pivoting element (8) axially translates the locking element (9) relative to a housing (31) or a transfer plate (32).

7. Inclination adjusting apparatus (5), according to one of the claims 2-4, **characterized in that** the locking element (9) axially translates locking element but rotates it about itself to make engagement non linear removing clearances with the housing or the transfer plate.

8. Inclination adjusting apparatus (5), according to claim 5, **characterized in that** a rotation of the transfer element (8) displaces the locking element (9).

9. Inclination adjusting apparatus (5) according to claims 2 - 5, 7 and 8 **characterized in that** a spring element (10) is provided between the locking elements (9) that prestresses the locking elements (9) into their locking position.

10. Inclination adjusting apparatus (5) according to claims 5-9, **characterized in that** a helical contour (19) is provided at the outer circumference of the transfer element (8).

11. Inclination adjusting apparatus (5) according to claim 10, **characterized in that** the helical contour is provided at the inner circumference of the locking element (9).

12. Vehicle seat (1) having an inclination adjusting apparatus according to either of the preceding claims.

13. Method to operate the inclination adjusting apparatus of a vehicle seat with respect to a seat part (2), wherein a side part (15) of the seat part and a side part (12) of the backrest are coupled pivotably together about a pivot point (P) and the backrest is latchable in the respective inclined position by way of a locking element (9), wherein transfer elements (8) are rotated and wherein this rotation induces a displacement movement of the locking elements (9) towards one another, **characterized in that** the inclination adjusting apparatus (5) comprises a transmission rod (7) and that during an inclination of the backrest (3) from a state pivoted entirely to the rear to a state pivoted entirely to the front the transmission rod (7) is moved between and along longitudinal sides of a dual sided partial-circular formation (14) arranged in the side part (12) of the backrest and/or in the side part (15) of the seat part.

14. Method according to claim 13, **characterized in, that** a spring element between the looking elements (9) is compressed.

## Patentansprüche

1. Neigungsverstellvorrichtung (5) zum Verstellen einer Rückenlehne (3) eines Fahrzeugsitzes bezüglich des Sitzteils (2), wobei ein Seitenteil (15) des Sitzteils und ein Seitenteil (12) der Rückenlehne um einen Drehpunkt (P) schwenkbar miteinander gekoppelt sind und die Rückenlehne mittels eines Verriegelungselements (9) in der jeweiligen geneigten Stellung verriegelt werden kann,
**dadurch gekennzeichnet, dass** eine doppelseitige teilweise kreisförmige Ausbildung (14) im Seitenteil (12) der Rückenlehne und/oder im Seitenteil (15) des Sitzteils angeordnet ist, wobei die Ausbildung (14) an ihren Längsseiten eine jeweilige Verzahnung (16) auf der Innenseite aufweist, wobei die Verzahnung (16) dazu konfiguriert ist, mit dem Verriegelungselement (9) zusammenzuwirken, wobei die Neigungsverstellvorrichtung (5) eine Getriebestange (7) umfasst, die dazu konfiguriert ist, während eines Neigens der Rückenlehne (3) aus einem vollständig nach hinten geschwenkten Zustand in einen vollständig nach vorne geschwenkten Zustand zwischen und entlang den Längsseiten der doppelseitigen teilweise kreisförmigen Ausbildung (14) bewegt zu werden.

2. Neigungsverstellvorrichtung (5) nach Anspruch 1, **dadurch gekennzeichnet, dass** das Verriegelungselement (9) axial verschiebbar auf der Getriebestange (7) oder dem Schwenkelement (8) vorgesehen ist.

3. Neigungsverstellvorrichtung (5) nach einem der vorhergehenden Ansprüche, **dadurch gekennzeichnet, dass** ein Verriegelungselement auf der rechten und/oder auf der linken Seite der Getriebestange (7) vorgesehen ist.

4. Neigungsverstellvorrichtung (5) nach Anspruch 3, **dadurch gekennzeichnet, dass** das Verriegelungselement (9) drehbar und axial verschiebbar auf der Getriebestange (7) oder dem Schwenkelement (8) vorgesehen ist.

5. Neigungsverstellvorrichtung (5) nach einem der Ansprüche 2 - 4, **dadurch gekennzeichnet, dass** das Verriegelungselement ein Übertragungselement (8) zumindest teilweise umgibt.

6. Neigungsverstellvorrichtung (5) nach einem der Ansprüche 2 - 4, **dadurch gekennzeichnet, dass** das Schwenkelement (8) das Verriegelungselement (9) bezüglich eines Gehäuses (31) oder einer Übertragungsplatte (32) axial translatorisch verschiebt.

7. Neigungsverstellvorrichtung (5) nach einem der Ansprüche 2 - 4, **dadurch gekennzeichnet, dass** das Verriegelungselement (9) das Element axial translatorisch verschiebt, es aber um sich selbst dreht, um einen nichtlinearen Eingriff herzustellen und dabei Zwischenräume zu dem Gehäuse oder zu der Übertragungsplatte zu beseitigen.

8. Neigungsverstellvorrichtung (5) nach Anspruch 5, **dadurch gekennzeichnet, dass** eine Drehung des Übertragungselements (8) das Verriegelungselement (9) verschiebt.

9. Neigungsverstellvorrichtung (5) nach einem der Ansprüche 2 - 5, 7 und 8, **dadurch gekennzeichnet, dass** ein Federelement (10) zwischen den Verriegelungselementen (9) vorgesehen ist, das die Verriegelungselemente (9) in ihrer Verriegelungsstellung vorspannt.

10. Neigungsverstellvorrichtung (5) nach den Ansprüchen 5 - 9, **dadurch gekennzeichnet, dass** eine schraubenförmige Kontur (19) am Außenumfang des Übertragungselements (8) vorgesehen ist.

11. Neigungsverstellvorrichtung (5) nach Anspruch 10, **dadurch gekennzeichnet, dass** die schraubenförmige Kontur am Innenumfang des Verriegelungselements (9) vorgesehen ist.

12. Fahrzeugsitz (1) mit einer Neigungsverstellvorrichtung nach einem der vorhergehenden Ansprüche.

13. Verfahren zur Betätigung der Neigungsverstellvorrichtung eines Fahrzeugsitzes bezüglich eines Sitzteils (2), wobei ein Seitenteil (15) des Sitzteils und ein Seitenteil (12) der Rückenlehne um einen Drehpunkt (P) schwenkbar miteinander gekoppelt sind und die Rückenlehne mittels eines Verriegelungselements (9) in der jeweiligen geneigten Stellung verriegelt werden kann, wobei Übertragungselemente (8) gedreht werden und wobei diese Drehung eine Verschiebungsbewegung der Verriegelungselemente (9) zueinander einleitet, **dadurch gekennzeichnet, dass** die Neigungsverstellvorrichtung (5) eine Getriebestange (7) umfasst und dass die Getriebestange (7) während eines Neigens der Rückenlehne (3) aus einem vollständig nach hinten geschwenkten Zustand in einen vollständig nach vorne geschwenkten Zustand zwischen und entlang den Längsseiten der doppelseitigen teilweise kreisförmigen Ausbildung (14), die in dem Seitenteil (12) der Rückenlehne und/oder in dem Seitenteil (15) des Sitzteils angeordnet ist, bewegt wird.

14. Verfahren nach Anspruch 13, **dadurch gekennzeichnet, dass** ein Federelement zwischen den Verriegelungselementen (9) komprimiert wird

## Revendications

1. Dispositif d'ajustement de l'inclinaison (5) pour régler un dossier (3) d'un siège de véhicule par rapport à une partie d'assise (2), dans lequel une partie latérale (15) de la partie d'assise et une partie latérale (12) du dossier sont couplées de façon pivotante l'une à l'autre autour d'un point de pivotement (P) et le dossier est verrouillable dans la position inclinée respective à l'aide d'un élément de verrouillage (9), **caractérisé en ce qu'**une formation partiellement circulaire à deux côtés (14) est agencée dans la partie latérale (12) du dossier et/ou dans la partie latérale (15) de la partie d'assise, ladite formation (14) comportant sur ses côtés longitudinaux une denture respective (16) sur le côté intérieur, dans lequel la denture (16) est configurée de manière à interagir avec l'élément de verrouillage (9), dans lequel le dispositif d'ajustement de l'inclinaison (5) comprend une tige de transmission (7) configurée de manière à être déplacée entre et le long des côtés longitudinaux de la formation partiellement circulaire à deux côtés (14) pendant une inclinaison du dossier (3) depuis un état basculé complètement vers l'arrière jusqu'à un état basculé complètement vers l'avant.

2. Dispositif d'ajustement de l'inclinaison (5) selon la revendication 1, **caractérisé en ce que** l'élément de verrouillage (9) est prévu d'une manière axialement déplaçable sur une tige de transmission (7) ou sur un élément pivotant (8).

3. Dispositif d'ajustement de l'inclinaison (5) selon l'une des revendications précédentes, **caractérisé en ce qu'**un élément de verrouillage est prévu sur le côté droit et/ou le côté gauche de la tige de transmission (7), respectivement.

4. Dispositif d'ajustement de l'inclinaison (5) selon la revendication 3, **caractérisé en ce que** l'élément de verrouillage (9) est agencé d'une manière axialement et rotativement déplaçable sur la tige de transmission (7) ou sur l'élément pivotant (8).

5. Dispositif d'ajustement de l'inclinaison (5) selon l'une des revendications 2 à 4, **caractérisé en ce que** l'élément de verrouillage entoure au moins partiellement un élément de transfert (8).

6. Dispositif d'ajustement de l'inclinaison (5) selon l'une des revendications 2 à 4, **caractérisé en ce que** l'élément pivotant (8) déplace axialement l'élément de verrouillage (9) par rapport à un boîtier (31) ou à une plaque de transfert (32).

7. Dispositif d'ajustement de l'inclinaison (5) selon l'une des revendications 2 à 4, **caractérisé en ce que** l'élément de verrouillage (9) déplace axialement l'élément de verrouillage mais fait tourner celui-ci sur lui-même afin de réaliser un engagement non linaire qui élimine les jeux avec le boîtier ou la plaque de transfert.

8. Dispositif d'ajustement de l'inclinaison (5) selon la revendication 5, **caractérisé en ce qu'**une rotation de l'élément de transfert (8) déplace l'élément de verrouillage (9).

9. Dispositif d'ajustement de l'inclinaison (5) selon la revendications 2 à 5, 7 et 8, **caractérisé en ce qu'**un élément de ressort (10) est prévu entre les éléments de verrouillage (9) et précontraint les éléments de verrouillage (9) dans leur position de verrouillage.

10. Dispositif d'ajustement de l'inclinaison (5) selon la revendications 5 à 9, **caractérisé en ce qu'**un contour hélicoïdal (19) est prévu à la circonférence extérieure de l'élément de transfert (8).

11. Dispositif d'ajustement de l'inclinaison (5) selon la revendication 10, **caractérisé en ce que** le contour hélicoïdal est prévu à la circonférence intérieure de l'élément de verrouillage (9).

12. Siège de véhicule (1) présentant un dispositif d'ajustement de l'inclinaison selon l'une quelconque des revendications précédentes.

13. Procédé de fonctionnement du dispositif d'ajustement de l'inclinaison d'un siège de véhicule par rapport à une partie d'assise (2), dans lequel une partie latérale (15) de la partie d'assise et une partie latérale (12) du dossier sont couplées de façon pivotante l'une à l'autre autour d'un point de pivotement (P), et le dossier est verrouillable dans la position inclinée respective à l'aide d'un élément de verrouillage (9), dans lequel des éléments de transfert (8) sont tournés, et dans lequel cette rotation induit un mouvement de déplacement des éléments de verrouillage (9) l'un vers l'autre, **caractérisé en ce que** le dispositif d'ajustement de l'inclinaison (5) comprend une tige de transmission (7), et **en ce que**, pendant une inclinaison du dossier (3) depuis un état basculé complètement vers l'arrière jusqu'à un état basculé complètement vers l'avant, la tige de transmission (7) est déplacée entre et le long des côtés longitudinaux de la formation partiellement circulaire à deux côtés (14) qui est agencée dans la partie latérale (12) du dossier et/ou dans la partie latérale (15) de la partie d'assise.

14. Procédé selon la revendication 13, **caractérisé en ce qu'**un élément de ressort est comprimé entre les éléments de verrouillage (9).
